**Europäisches Patentamt**

**European Patent Office**

**Office européen des brevets**

(19)

(11) Veröffentlichungsnummer : **0 022 505**
**B1**

(12) **EUROPÄISCHE PATENTSCHRIFT**

(45) Veröffentlichungstag der Patentschrift .
20.04.83

(21) Anmeldenummer : 80103701.1

(22) Anmeldetag : 30.06.80

(51) Int. Cl.³ : **F 04 B 3/00**, **G 01 F 11/02**
**B 29 B 5/06**

(54) **Vorrichtung zum Dosieren von Zweikomponenten-Produkten.**

(30) Priorität : 07.07.79 DE 2927584

(43) Veröffentlichungstag der Anmeldung :
21.01.81 Patentblatt 81/03

(45) Bekanntmachung des Hinweises auf die Patenterteilung : 20.04.83 Patentblatt 83/16

(84) Benannte Vertragsstaaten :
AT BE CH DE FR GB IT LI NL SE

(56) Entgegenhaltungen :
FR A 2 301 292
FR A 2 421 288
US A 3 239 100
US A 3 717 306
US A 4 029 236
US A 4 122 047

(73) Patentinhaber : Henkel Kommanditgesellschaft auf Aktien
Postfach 1100 Henkelstrasse 67
D-4000 Düsseldorf 1 (DE)

(72) Erfinder : Kluth, Hermann
Degerstrasse 48
D-4000 Düsseldorf 1 (DE)
Erfinder : Bachmann, Robert
Marconistrasse 48
D-4000 Düsseldorf 13 (DE)
Erfinder : Wegner, Jürgen, Dr.
Siegfriedstrasse 21
D-4000 Düsseldorf 11 (DE)

EP 0 022 505 B1

« Vorrichtung zum Dosieren von Zweikomponenten-Produkten »

Die Erfindung betrifft eine Vorrichtung zum Dosieren von Zweikomponenten-Produkten vorbestimmten Mischungsverhältnisses durch Pressen der einzelnen Komponenten mit Hilfe von Kolben und Zusammenführen in einem Mischer.

Vorrichtungen dieser Art werden zum Mischen zweier flüssiger bzw. fließender Komponenten, insbesondere Harz und Härter, benutzt. Wegen der an sich erwünschten Reaktion zwischen den Komponenten, kann das Mischen erst kurz vor Gebrauch stattfinden und soll zum Erzielen eines optimalen Effekts in einem bestimmten Mengenverhältnis erfolgen. Zum Dosieren und zum Einstellen eines bestimmten Mischungsverhältnisses werden bisher aus Tuben oder zylindrischen Behältern mittels Kolben flüssige bis gelförmige Stränge beider Komponenten ausgepreßt und miteinander vermischt. Die bekannten Vorrichtungen haben entweder den Nachteil einer relativ ungenauen Dosierung und Einstellung des Mischungsverhältnisses oder es sind besondere Mittel zum Entleeren erforderlich. Bei einigen Vorrichtungen muß der gesamte Inhalt auf einmal verbraucht werden.

Aus der US-A-4 029 236 ist bereits eine Vorrichtung zum Dosieren von Zweikomponentenprodukten eines vorbestimmten Mischungsverhältnisses durch Pressen der einzelnen Komponenten mit Hilfe von Kolben und Zusammenführen in einem Mischer bekannt. Diese Vorrichtung ist auch durch zwei, durch ein Paar von gleichzeitig gegenläufig von einem Zentrum aus zu verschiebenden Kolben getrennte Kammern mit an dem äußeren Längsende der einen Kammer angeordnetem Mischer und einer die andere Kammer mit dem Mischer verbindenden, zentral durch die erste Kammer geführten Komponentenleitung gekennzeichnet. Dabei ist es auch schon bekannt, daß bei einer solchen Vorrichtung für jede der beiden Kammern ein gesonderter, einen abdichtenden Kolben aufweisender Zylindertopf vorgesehen ist. Der Zylinderdurchmesser des einen, ersten Zylindertopfes ist dabei größer als derjenige des anderen, zweiten Zylindertopfes. Der zweite Zylindertopf ist unter Mitnahme des Kolbens des ersten Zylindertopfes in den ersten Zylindertopf zu schieben. Die Komponentenleitung führt als Rohr längs durch den ersten Zylindertopf, ist an dessen verschlossenen Ende fest mit dem Mischer verbunden und mündet in diesen und ist am anderen Ende fest mit dem Kolben des zweiten Zylindertopfes verbunden und mündet in letzteren. Ferner weist der erste Zylindertopf eine direkte Mündung zum Mischer auf.

Aus der US-A-4 029 236 ist es darüberhinaus gekannt, daß das Mischungsverhältnis der beiden Komponenten durch das Verhältnis der Durchmesser der beiden Zylindertöpfe vorgegeben ist, daß eine Belüftungsöffnung zwischen den Ausgangslagen der beiden Kolben vorgesehen ist und daß der Kolben ein integrierter Bestandteil des Zylindertopfes ist.

Der Erfindung liegt die Aufgabe zugrunde, eine Vorrichtung eingangs genannter Art zu schaffen, die einerseits auf einfachste Weise, zum Beispiel mit einem Griff, zu handhaben ist und andererseits ein zwangsweise exaktes Einstellen des gewünschten Mischungsverhältnisses und der Gesamtmenge der zusammenzubringenden Komponenten gewährleistet. Die erfindungsgemäße Lösung ist durch die im Anspruch 1 gekennzeichneten Merkmale gekennzeichnet.

Da die beiden Kolben gleichzeitig zu bewegen sind, kann das Zusammenfügen und Vermischen der beiden Komponenten mit einem einzigen Handgriff bewirkt werden. Wenn das geschieht und dabei eine der jeweiligen Bewegung entsprechende Menge der einen oder anderen Komponente zu dem Mischer geführt wird, ergibt sich ein vom Gutdünken der Betätigungsperson unabhängiges, festes Mischungsverhältnis, das durch die mechanische Ausbildung der Kolbenantriebe bzw. der Geometrie der Kammern vorgegeben werden kann.

Gemäß der Erfindung sind die beiden Kammern Teile eines einzigen Zylinders, der in Längsrichtung durch das Kolbenpaar unterteilt ist. Als gemeinsamer Antrieb der beiden gegenläufig zu bewegenden Kolben und gleichzeitig als Komponentenleitung ist eine hohle Schraubspindel vorgesehen, deren Außenseite Bereiche mit gegenläufigem Gewinde aufweist. Auf das eine Längsende dieser Schraubspindel soll vorzugsweise eine etwa als Kartuschenöffnung ausgebildete Mischerdüse aufgesetzt sein. Zweckmäßig weist ferner das der Mischerdüse gegenüberliegende Längsende der Schraubspindel eine etwa radial von außen in die hohle Spindelseele führende Bohrung zum Hindurchpressen der in der angrenzenden Kammer befindlichen Komponente auf.

Bei Drehung der Schraubspindel (in einer Drehrichtung) werden die beiden mit Gewinde auf die Schraubspindel aufgesetzten Kolben — ähnlich wie bei einer Rollspindel — gegenläufig auseinander und in Richtung auf die Längsenden des Zylinders bewegt. Das eine Längsende des Zylinders ist bis auf einen Durchbruch zu dem Mischer bzw. zu der Mischerdüse verschlossen, während — bei vollkommen geschlossenem anderen Längsende des Zylinders — die Schraubspindel in der Nähe dieses Längsendes eine zum inneren Hohlraum der Spindel führende Bohrung aufweist. Bei Betätigung der Schraubspindel wird daher mit Hilfe der Kolben aus der einen Kammer die eine Komponente unmittelbar in die Mischerdüse und aus der anderen Kammer die andere Komponente über die hohle Seele der Spindel ebenfalls zur Mischerdüse gepreßt.

Vorzugsweise entspricht das Verhältnis der Steigungen der gegenläufigen Teile des Gewindes der Schraubspindel dem vorgesehenen Mischungsverhältnis der zusammenzuführenden Komponenten. Dabei soll das Verhältnis der Längen der Kammern demjenigen der Steigungen in den entsprechenden Bereichen des gegenläufigen Spindelgewindes angepaßt sein. Bei Betätigung der Spindel gelangen dann beide Kolben zugleich am Längsende der zugehörigen Kammer an und es ergibt sich eine optimale Nutzung der jeweils zum Einsatz kommenden Zweikomponenten-Produkte. Die erfindungsgemäße Vorrichtung findet z. B. bei Zweikomponenten-Flüssigkunststoffen, bei denen es sich u. a. um Klebstoff-, Dichtungs- und Beschichtungsmassen handeln kann, Anwendung.

Um ein einwandfreies Vorwärtsschieben der jeweiligen Komponenten mit Hilfe der beiden Kolben zu erreichen, ist vorzugsweise im Zylinderbereich zwischen den Ausgangslagen der beiden Kolben wenigstens eine Belüftungsöffnung vorgesehen, durch die Luft in den — bei Betrieb — sich vergrößernden Raum zwischen den Rückseiten der Kolben eingesaugt werden kann.

Vorteilhaft ist der an einem Längsende der Vorrichtung vorgesehene Mischer als statisches Mischrohr ausgebildet. In diesem oder auch in anderen Fällen kann der Mischer wenigstens im Bereich der Austrittsöffnung der einen Komponente vorzugsweise derart elastisch sein, daß ein Austritt der Komponente nur bei gewissem auf die Komponente ausgeübten Mindestdruck erfolgt. Hierdurch werden unerwünschte (verfrühte) Reaktionen der Komponenten vermieden. Bei sehr großen erfindungsgemäßen Vorrichtungen bzw. Kartuschen kann das eine Längsende der Schraubspindel als Ansatzstutzen zum Ankuppeln eines motorischen Antriebs ausgebildet werden.

Anhand der schematischen Zeichnung eines Ausführungsbeispiels werden weitere Einzelheiten der Erfindung in Form einer Vorrichtung mit **gemeinsamem Zylinder für beide Kammern dargestellt.**

In der erfindungsgemäßen Vorrichtung zum Dosieren von Zweikomponenten-Produkten in einem vorbestimmten Mischungsverhältnis werden die einzelnen Komponenten A und B gemäß Figur mit Hilfe von Kolben 1 und 2 in Richtung auf einen insgesamt mit 3 bezeichneten Mischer gepreßt und dort zusammengeführt. Ein wesentliches Merkmal besteht daher darin, daß ein einziger, die Komponenten A und B in durch ein Paar von gleichzeitig gegenläufig von einem Zentrum 4 aus zu verschiebenden Kolben 1 und 2 getrennten Kammern 5 und 6 aufnehmender Zylinder 7 mit an dem Zylinderlängsende der einen Kammer 5 angeordnetem Mischer 3 und einer das Zylinderlängsende der anderen Kammer 6 mit dem Mischer verbindenden Komponentenleitung 8 vorgesehen ist.

Die beiden Kolben 1 und 2 sind im Zylinder 7 auf einer mit gegenläufigen Gewinden 9 und 10 versehenen Schraubspindel 11 angeordnet, welche als Hohlwelle ausgebildet sein soll. Durch Drehen der Schraubspindel 11 werden dann die Kolben 1 und 2 in entgegengesetzter Richtung 12 und 13 bewegt, wobei die Komponente A direkt aus der Kartuschenöffnung bzw. Austrittsöffnung 14 austritt, während die Komponente B über ein nahe der Zylinderlängswand 15 vorgesehenes im Prinzip radiales Loch 16 der Schraubspindel 11 aus der Kammer 6 in das Innere der als Komponentenleitung 8 ausgebildeten Schraubspindel 11 tritt. Zweckmäßig weist der Zylinder 7 ferner radial außerhalb des Zentrums 4 eine Belüftungsöffnung 17 auf, mit Hilfe derer das Entstehen eines Unterdrucks beim Auseinanderbewegen der Kolben 1 und 2 verhindert wird.

Das Mischungsverhältnis der Komponenten A und B kann je nach Wahl des Verhältnisses der Steigungen der Gewinde 9 und 10 so zwangsweise vorgegeben werden, daß sich beim Betätigen automatisch das richtige bzw. optimale Verhältnis einstellt. Zweckmäßig wird die Länge der Kammern 5 und 6 den Gewinden 9 und 10 so angepaßt, daß bei Betätigen der Schraubspindel 11 die beiden Kolben 1 und 2 zugleich am jeweiligen Zylinderlängsende angelangen.

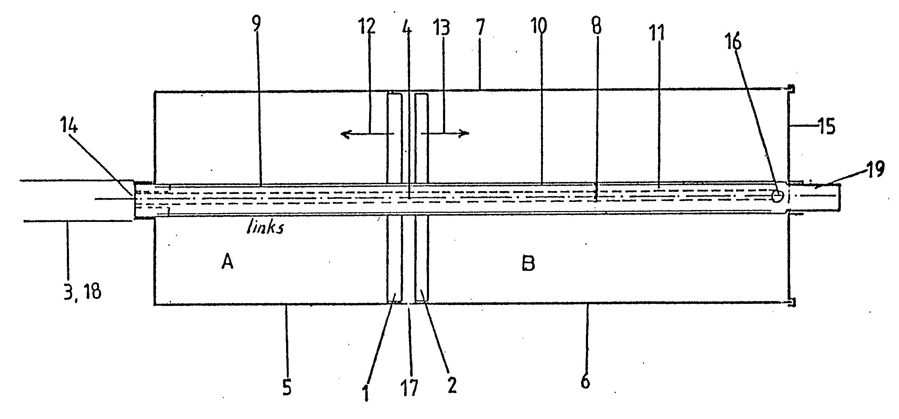

Vorzugsweise bei Ausbildung der erfindungsgemäßen Vorrichtung nach der Figur als größere Kartusche kann das eine Längsende der Schraubspindel 11, zweckmäßig das dem Mischer 3 gegenüberliegende Ende, mit einem Ansatz 19, z. B. einer Kupplung oder einem Stutzen, zum Aufsetzen eines motorischen Antriebs ausgebildet sein. Auf diese Weise ist es möglich, diese Vorrichtung auch mit Hilfe einer Heimwerkermaschine, z. B. einer handelsüblichen Bohrmaschine, anzutreiben.

Grundsätzlich kann die erfindungsgemäße Vorrichtung außer auf konventionellem Wege auch durch die Austrittsöffnungen des Produktes gefüllt werden.

Auf die Austrittsöffnung 14 kann zum Durchmischen der beiden Komponenten A und B ein statisches Mischrohr 18 aufgesteckt werden. Die Austrittsöffnung 14 kann ferner vorteilhaft als elastisches Teil so gestaltet werden, daß ein Austritt der einen Komponente, z. B. der Komponente B, nur unter gewissem Mindestdruck erfolgt. Hierdurch wird u. a. eine unerwünschte Reaktion der Komponenten durch Eindringen in die jeweilig andere Kammer unterdrückt.

Liste der Bezugszeichen

A, B = Komponenten
1, 2 = Kolben
3     = Mischer
4     = Zentrum
5, 6  = Kammern
7     = Zylinder
8     = Komponentenleitung
9, 10 = Gewinde
11    = Schraubspindel
12, 13 = Richtungspfeil
14    = Austrittsöffnung
15    = Zylinderlängswand
16    = Loch zu 11
17    = Belüftungsöffnung

18 = statisches Mischrohr
19 = Ansatz

**Ansprüche**

1. Vorrichtung zum Dosieren von Zweikomponenten-Produkten vorbestimmten Mischungsverhältnisses durch Pressen der einzelnen Komponenten mit Hilfe von Kolben und Zusammenführen in einem Mischer, gekennzeichnet durch zwei durch ein Paar von gleichzeitig gegenläufig von einem Zentrum aus zu verschiebender Kolben (1, 2) getrennte Kammern (5, 6), welche Teile eines einzigen, durch das Kolbenpaar (1, 2) in der Längsrichtung unterteilten Zylinders (7) sind, mit an dem äußeren Längsende der einen Kammer (5) angeordnetem Mischer (3, 18) und einer die andere Kammer (6) mit dem Mischer (3, 18) verbindenden, zentral durch die erstere Kammer (5) geführten Komponentenleitung (8) in Form einer hohlen Schraubspindel (11) mit auf der Außenseite vorgesehenen Bereichen mit gegenläufigem Gewinde (9, 10) als Kolbenantrieb.

2. Vorrichtung durch Anspruch 1, gekennzeichnet durch eine auf ein Längsende der Schraubspindel (11) gesetzte, insbesondere als Kartuschenöffnung ausgebildete, Mischerdüse als Mischer (3).

3. Vorrichtung nach Anspruch 2, dadurch gekennzeichnet, daß das der Mischerdüse (3) gegenüberliegende Längsende der Schraubspindel (11) eine von außen etwa radial in deren hohle Seele führende Bohrung (16) zum Hindurchführen der in der angrenzenden Kammer (6) befindlichen Komponente (B) in die Hohlwelle aufweist.

4. Vorrichtung nach einem oder mehreren der Ansprüche 1 bis 3, dadurch gekennzeichnet, daß das Verhältnis der Steigungen der gegenläufigen Teile des Gewindes (9, 10) dem vorgesehenen Mischungsverhältnis der zusammenzuführenden Komponenten (A, B) entspricht.

5. Vorrichtung nach einem oder mehreren der Ansprüche 1 bis 4, dadurch gekennzeichnet, daß das Verhältnis der Längen der Kammern (5, 6) demjenigen der Steigungen in den entsprechenden Bereichen des gegenläufigen Gewindes (9, 10) angepaßt ist.

6. Vorrichtung nach einem oder mehreren der Ansprüche 1 bis 5, dadurch gekennzeichnet, daß das dem Mischer (3) gegenüberliegende Längsende der Schraubspindel (11) einen Ansatz (19) zur Aufnahme eines motorischen Antriebs aufweist.

7. Vorrichtung nach einem oder mehreren der Ansprüche 1 bis 6, dadurch gekennzeichnet, daß auf den an einem Längsende vorgesehenen Mischer (3) ein statisches Mischrohr (18) aufgesetzt ist.

8. Vorrichtung nach einem oder mehreren der Ansprüche 1 bis 7, dadurch gekennzeichnet, daß der Mischer (3) wenigstens im Bereich der Austrittsöffnung der einen Komponente (A, B) derart elastisch ausgebildet ist, daß ein Austritt der Komponente nur bei gewissem auf die Komponente ausgeübten Mindestdruck erfolgt.

**Claims**

1. Device for the metering of two-component products of predetermined mixing ratio through pressing of the individual components with the aid of pistons and guiding together in a mixer, characterised by two chambers (5, 6), which are separated by a pair of pistons (1, 2) to be displaced simultaneously in opposite sense from a centre and which are parts of a single cylinder (7) subdivided in the longitudinal direction by the pair of pistons (1, 2) and with a mixer (3, 18) arranged at the outer longitudinal end of the one chamber (5) and a component duct (8), conducted centrally through the first chamber (5) and connecting the other chamber (6) with the mixer (3, 18), in the shape of a hollow threaded spindle (11) with regions provided on the outside with oppositely-handed thread (9, 10) as piston drive.

2. Device according to claim 1, characterised by a mixer nozzle, placed on one longitudinal end of the threaded spindle (11) and constructed particularly as cartridge opening, as mixer (3).

3. Device according to claim 2, characterised thereby, that the longitudinal end of the threaded spindle (11) lying opposite the mixer nozzle (3) has a bore (16), leading about radially from the outside into its hollow core, for the conduction of the components (B) disposed in the adjoining chamber (6) through into the hollow shaft.

4. Device according to one or more of the claims 1 to 3, characterised thereby, that the ratio of the pitches of the oppositely-handed parts of the thread (9, 10), corresponds to the envisaged mixing ratio of the components (A, B) to be guided together.

5. Device according to one or more of the claims 1 to 4, characterised thereby, that the ratio of the lengths of the chambers (5, 6) is matched to that of the pitches in the corresponding regions of the oppositely-handed thread (9, 10).

6. Device according to one or more of the claims 1 to 5, characterised thereby, that the longitudinal end of the threaded spindle (11) lying opposite the mixer displays a projection (19) for the reception of a motorised drive.

7. Device according to one or more of the claims 1 to 6, characterised thereby, that a static mixing tube (18) is placed on the mixer (3) provided at one longitudinal end.

8. Device according to one or more of the claims 1 to 7, characterised thereby, that the mixer (3) at least in the region of the exit opening of the one component (A, B) is elastically constructed in such a manner that an issue of the component takes place only at a certain minimum pressure exerted on the component.

**Revendications**

1. Dispositif pour le dosage de matériaux à deux composants ayant un rapport de mélange prédéterminé par compression des différents composants à l'aide de pistons et réunion dans un mélangeur, caractérisé par le fait qu'il comporte deux chambres (5, 6) qui sont séparées par une paire de pistons (1, 2) pouvant coulisser simultanément en sens opposé en partant d'un centre et qui sont incorporés dans un cylindre unique (7) subdivisé en direction longitudinale par cette paire de pistons (1, 2) et pourvu d'un mélangeur (3, 18) disposé à l'extrémité longitudinale extérieure de l'une des chambres (5) et d'un tuyau à composants (8) reliant l'autre chambre (6) au mélangeur (3, 18) et passant de façon centrée à travers la première chambre (5), sous la forme d'une tige creuse (11) filetée extérieurement et comportant des zones à filetages de sens opposés (9, 10) prévus pour l'entraînement respectif de chacun des pistons.

2. Dispositif selon la revendication 1, caractérisé par le fait qu'il comporte une buse mélangeuse servant de mélangeur (3), posée sur une extrémité longitudinale de la tige creuse filetée (11) et, en particulier, conçue sous forme d'une ouverture de cartouche.

3. Dispositif selon la revendication 2, caractérisé par le fait que l'extrémité longitudinale de la tige creuse filetée (11), qui est opposée à la buse mélangeuse (3), comporte une perforation (16) débouchant à peu près radialement de l'extérieur dans son âme creuse pour amener dans cette tige creuse le composant (B) qui se trouve dans la chambre adjacente (6).

4. Dispositif selon l'une quelconque des revendications 1 à 3, caractérisé par le fait que le rapport des pas des filetages (9, 10) de sens opposés correspond au rapport de mélange prévu des composants (A, B) à réunir.

5. Dispositif selon l'une quelconque des revendications 1 à 4, caractérisé par le fait que le rapport des longueurs des chambres (5, 6) est adapté à celui des pas des filetages de sens opposés (9, 10) des zones correspondantes de tige creuse filetée.

6. Dispositif selon l'une quelconque des revendications 1 à 5, caractérisé par le fait que l'extrémité longitudinale de la tige creuse filetée (11), qui est opposée au mélangeur (3), présente une partie saillante (19) adaptée pour recevoir un entraînement à moteur.

7. Dispositif selon l'une quelconque des revendications 1 à 6, caractérisé par le fait que sur le mélangeur (3) prévu à une extrémité longitudinale est posé un tube mélangeur statique (18).

8. Dispositif selon l'une quelconque des revendications 1 à 7, caractérisé par le fait que le mélangeur (3) présente, au moins dans la zone de l'ouverture d'expulsion de l'un des composants (A, B), une constitution élastique de telle sorte que l'expulsion des composants ne s'effectue que lorsqu'une certaine pression minimale est exercée sur eux.